# EUROPÄISCHE PATENTANMELDUNG

(11) **EP 2 316 738 A2**
(43) Veröffentlichungstag der Anmeldung: **04.05.2011**
(21) Anmeldenummer: 10189629.8
(22) Anmeldetag: 02.11.2010
(51) Int. Cl.: B65C 3/06, B67C 3/24, B65G 47/84, B65G 47/90

(54) **Stretch-Sleeve-Etikettieren**

(30) Priorität: 02.11.2009 CH 16782009
(71) Anmelder: Bühler, Leo, 8820 Wädenswil (CH)
(72) Erfinder: Bühler, Leo, 8820 Wädenswil (CH)
(74) Vertreter: Künsch, Joachim

(57) **Zusammenfassung**

Die Erfindung bezieht sich auf das Stretch-Sleeve-Etikettieren von Behältnissen, insbesondere PET-Flaschen, wobei sich ein Teilaspekt der Erfindung auf einen Greifer bezieht, dessen Greifarme (1,1') durch die Greif- bzw. Loslassbewegung aus dem Arbeitsbereich bewegt werden, ein weiterer Teilaspekt sich auf eine Spannvorrichtung (100) bezieht, bei der sich die Spannelemente (101) über eine Schwenkbewegung auseinander bewegen, und ein weiterer Teilaspekt sich auf eine Einschiessvorrichtung (201) bezieht, die ohne mit nachfolgenden Arbeitsvorrichtungen zu kollidieren, mit Stretch-Sleeves unterschiedlicher Grösse beschickt werden kann.

## Beschreibung

Die Erfindung bezieht sich auf die Handhabung von Objekten, insbesondere Flaschen, und das Anbringen von ringförmigen bzw. schlauchförmigen Folien, Etiketten, etc. auf diese Objekte. Insbesondere in der Getränkeindustrie werden PET-Flaschen mit einer umlaufenden Folie versehen, auf der den Inhalt betreffende Informationen aufgedruckt sind und die als Aufmachung der Flasche einen ansprechenden Gesamteindruck verleihen soll. Im speziellen bezieht sich die Erfindung auf eine Stretch-Sleeve-Etikettierungsvorrichtung und im einzelnen auch auf einen Greifer für Flaschen und einer Beschickungsvorrichtung für die Stretch-Vorrichtung.

Für die auf dem Markt befindlichen Polyester-Flaschen (PET-Flaschen) für stille und kohlensäurehaltige Getränke werden in zunehmendem Mass Etiketten eingesetzt, die aus Polyolefin-Folien bestehen. Dabei werden für das Etikettieren üblicherweise zwei Verfahren verwendet, nämlich das sogenannte Stretch-Sleeve-Etikettieren und das Wrap-around-Etikettieren. Beim Stretch-Sleeve-Etikettieren wird ein Schlauch geformt, der üblicherweise aus einem elastischen Polyäthylen besteht. Der Schlauchabschnitt wird vor dem Etikettieren aufgedehnt und über die Flaschenaussenseite gestülpt und gezogen.

Innerhalb der Sleeve-Etikettierung sind zwei unterschiedliche Verfahren zu unterscheiden. Bei einem ersten Verfahren werden Sleeve-Etiketten verarbeitet, welche einen Innendurchmesser aufweisen, welcher um ein bestimmtes Mass grösser ist als der Aussendurchmesser der zu etikettierenden Behälter, was zur Folge hat, dass die Sleeve-Etiketten nach der Positionierung durch Energiezufuhr geschrumpft werden müssen.

Bei einem zweiten Verfahren werden Sleeve-Etiketten verarbeitet, deren Innendurchmesser um ein bestimmtes Mass kleiner ist als der Aussendurchmesser der zu etikettierenden Behälter. Bei diesem Verfahren werden die Sleeve-Etiketten mittels einer Spannvorrichtung gedehnt. Aufgrund seiner Rückstellkraft schmiegt sich die schlauchförmige Etikette an die Aussenseite des Behälters an. Auf eine Schrumpfung der Sleeve-Etiketten kann bei dieser Vorgehensweise verzichtet werden.

Diese Sleeve-Etiketten bestehen in der Regel aus einem Abschnitt eines Kunststoffschlauches, welcher zunächst teilungsgerecht von einem endlosen Etikettenband abgelängt wird.

Fertigungsstrassen für diese Prozedur sind im Stand der Technik bekannt, jedoch sind noch viele Probleme ungelöst und begrenzen die Effizienz solcher Anlagen. Ein Aspekt der Erfindung bezieht sich auf eine Greifvorrichtung, mit der eine Flasche oder ganz allgemein ein Gegenstand gefasst und dann gegebenenfalls weiterbewegt werden soll. Das Problem bei Greifern aus dem Stand der Technik besteht darin, dass der Arbeitsbereich - also jene Stelle, an der ein Gegenstand vom Greifer erfasst wird - auch bei geöffneten Greifarmen schwer zugänglich ist, z.B. weil die Greifarme bzw. die Greifbacken aus Platzmangel nicht vollständig nach aussen ausschwenken können. Es blieb daher nur die Möglichkeit, den Greifer als Ganzes vom Arbeitsbereich wegzubewegen, z.B. nach hinten zu verschieben oder zu verschwenken, oder nach unten oder nach oben. Dies erfordert jedoch einen eigenen Antriebsmechanismus für den Greifer als Ganzes.

Die Erfindung löst dieses Problem mit einem Greifer gemäss Anspruch 12, bei dem zumindest ein Greifarm über ein Führungselement mit der Greiferbasis verbunden ist, das einen Punkt des Greifarms während der Greifbewegung auf einer seitlich nach aussen gewölbten Kurve hält, und dass der Greifarm an einem anderen Punkt mit einer weiteren Führung zusammenwirkt. Beim Öffnen und/oder beim Schliessen beschreiben die Greiferbacken eine kreisförmige Bewegung und fahren anschliessend in eine lineare Bewegung die Greiferbacken aus dem Greiferbereich.

Durch diese Massnahme bewegen sich die Greifarme, wenn sie einen Gegenstand loslassen, vom Arbeitsbereich weg in Richtung Greiferbasis. Der Arbeitsbereich kann nun wieder mit nachfolgendem Gut, eben z.B. Flaschen, beschickt werden, ohne dass die Greiferarme im Weg wären. Das zu greifende Gut kann somit auch seitlich in den Arbeitsbereich des Greifers befördert werden, nachdem sich die Greifarme in Richtung Greifbasis zurückgezogen haben. Die Maschine erzielt dadurch auch eine höhere Taktzeit, da der Greiferbereich schneller frei ist.

Das Greifen und das Wegbewegen aus dem Arbeitsbereich erfolgt bei der Erfindung im Gegensatz zum Stand der Technik mit einem einzigen Bewegungsmechanismus.

Vorteilhaft ist das Führungselement ein Schwenkarm, der mit der Greiferbasis und mit dem Greifarm schwenkbar verbunden ist.

Weiter vorteilhaft ist das Führungselement eine an der Greiferbasis befestigte Kulissenführung.

Vorteilhaft ist die weitere Führung als Führungsfläche ausgebildet ist, entlang der sich der Greiferarm während der Greifbewegung abstützt, wobei besonders vorteilhaft die Führungsfläche die seitliche Aussenfläche der Greiferbasis ist.

Weiter vorteilhaft stützt sich der Greifarm an der Führung mittels einer drehbaren Rolle ab.

Vorteilhaft greift ein für die Greifbewegung vorgesehener Antriebsmechanismus am Greifarm im Bereich der Verbindungsstelle zum Führungselement an.

Weiter vorteilhaft ist ein für die Greifbewegung vorgesehener Antriebsmechanismus in Form eines Hebelmechanismus ausgebildet, wobei besonders vorteilhaft der Hebelmechanismus durch eine linear verfahrbare Zahnstange betätigt wird, die mit einem Zahnrad zusammenwirkt, das mit einem Hebel des Hebelmechanismus drehfest verbunden ist. Gleichzeitig arretiert der Hebelmechanismus in einem definierten Punkt die Greiferbacken.

Ausführungsformen des erfindungsgemässen Greifers werden zudem nachfolgend anhand der Zeichnungen näher erläutert. Dabei zeigt
Fig. 1 einen erfindungsgemässen Greifer in geschlossener Stellung,
Fig. 2 den Greifer in offener Stellung, und
Fig. 3 den geschlossenen Greifer von oben.

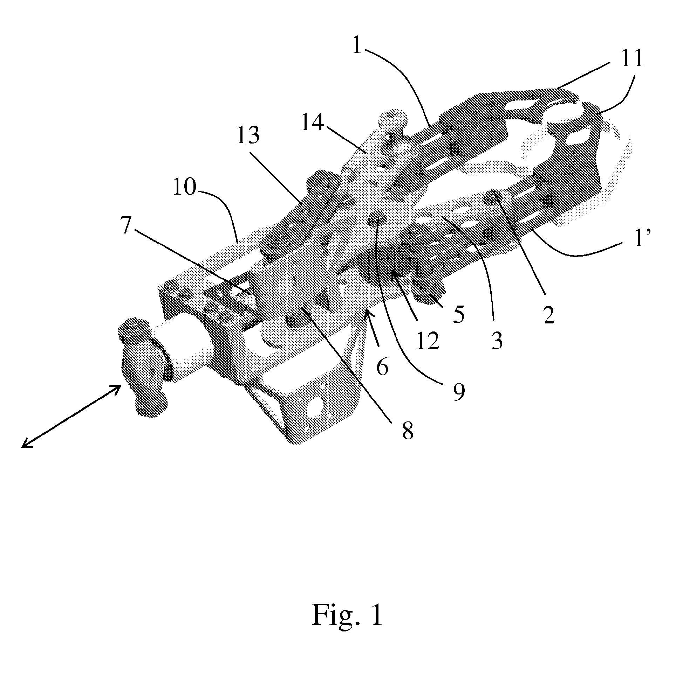

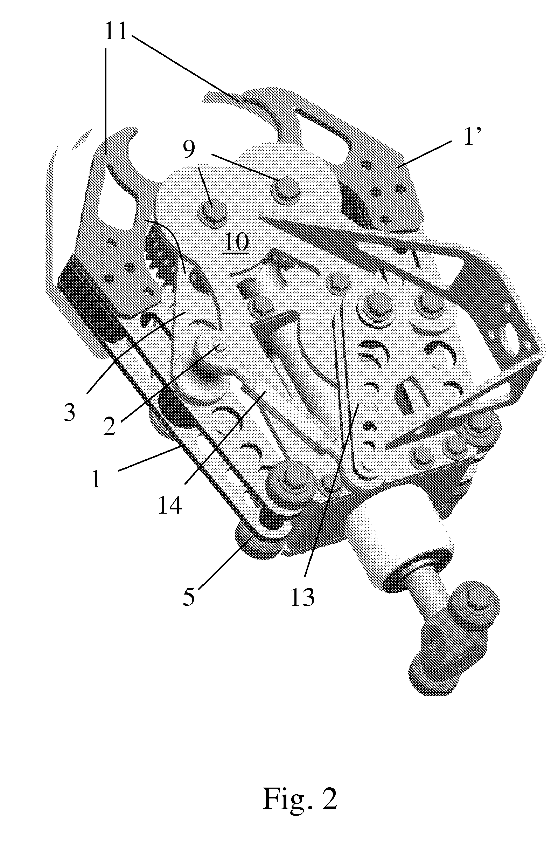

Fig. 1 zeigt einen Greifer bestehend aus einer Greiferbasis 10, mit der zwei Greiferarme 1, 1' verbunden sind. Die den Gegenstand greifenden Enden der Greiferarme, die in Form von Greifbacken 11 ausgebildet sind, bewegen sich während der Greifbewegung relativ zur Greiferbasis 10 und aufeinander zu. Als Zwischenglied zwischen Greiferarm und Greiferbasis ist jeweils ein als Führungselement wirkender Schwenkarm 3 vorgesehen, der sowohl mit dem Greiferarm, als auch mit der Greiferbasis einen Drehpunkt 2 bzw. 9 ausbildet. Der an der Verbindung zwischen Greiferarm 1, 1' und Schwenkarm 3 liegende Punkt 2 wird somit während der Greifbewegung in Bezug auf die Greiferbasis 10 in einer kreisförmigen Bahn geführt bzw. gehalten. Dies bewirkt, dass die Greifarme 1, 1' bei der Loslassbewegung nicht nur zur Seite geschwenkt, sondern auch nach hinten, in Richtung Greiferbasis 10 bewegt werden, wodurch der Arbeitsbereich freigegeben wird. Fig. 2 zeigt diese offene Stellung des Greifers.

Am anderen, dem greifenden Ende entgegen gesetzten Ende eines Greifarmes, weist dieser eine Abstützrolle 5 auf, die während der Greif- und Loslassbewegung des Greifers an einer Führungsfläche 6 der Greiferbasis 10 abrollt und sich dort abstützt. Diese weitere Führung 6 sorgt dafür, dass die Bewegung der Greifarme 1, 1' um den Drehpunkt 2 in jeder Stellung eindeutig definiert ist. Dabei liegt der Verbindungspunkt des Greifarmes 1, 1' mit dem Schwenkarm 3 zwischen dem greifenden Ende des Greifarmes und dem Abstützpunkt 5 des Greifarmes an der zweiten Führung 6.

In geschlossener Stellung der Greifarme sitzt der Abstützpunkt 5, im vorliegenden Fall als Rolle ausgebildet, in einer Vertiefung der Führungsfläche 6. Beim Öffnen gelangt die Rolle aus der Vertiefung und die Führungsfläche 6 setzt sich als ebene Fläche fort. Diese Kontur bewirkt, dass sich die Greiferarme 1, 1' zunächst im Radius der Drehpunkte 9 öffnen, bis die Rolle aus der Vertiefung gelangt und die Rotationsbewegung der Greiferarme 1, 1 ' in eine lineare Bewegung übergeht. Die Greiferarme 1, 1' bewegen sich nach hinten und gelangen aus dem Arbeitsbereich.

Der Antriebsmechanismus wirkt im vorliegenden Ausführungsbeispiel direkt auf die Greifarme 1, 1', wobei der Antrieb grundsätzlich auch auf die Schwenkarme 3 wirken könnte. Eine durch einen Antrieb, z.B. einen Motor, einen Druckzylinder, etc., linear verschiebbare Zahnstange 7 wirkt mit einem Zahnrad 8 zusammen, das drehfest mit einem ersten Hebelarm 13 eines Hebelmechanismus verbunden ist. Ein mit dem ersten Hebelarm 13 gelenkig verbundener zweiter Hebelarm 14 greift an dem Verbindungspunkt 2 des Greifarms 1, 1' mit dem Schwenkarm 3 an und zieht bei der Loslassbewegung den Greifarm nach hinten bzw. drückt ihn bei der Greifbewegung nach vorne in Richtung Arbeitsbereich.

Die beiden Greiferarme 1, 1' sind über zwei Zahnräder 12 miteinander synchronisiert, sodass der Antrieb indirekt auch auf den zweiten Greiferarm wirkt.

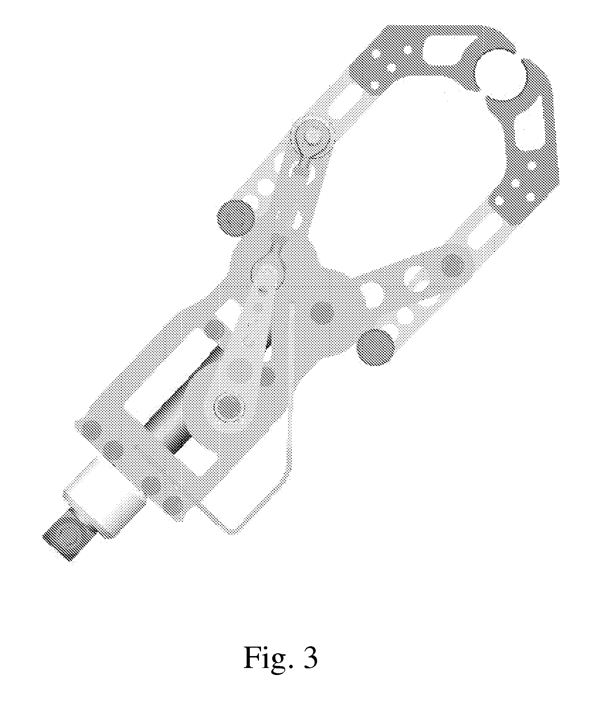

Der in den Fig. 1 bis 3 dargestellte Greifer stellt nur eine Möglichkeit dar, den erfinderischen Gedanken zu verwirklichen. Mehrere Abwandlungen und Varianten sind denkbar und werden im folgendem kurz beschrieben.

Anstelle des Schwenkarmes 3 als Führungselement für den Greifarm 1, 1' könnte auch eine Kulissenführung zum Einsatz kommen, die Teil der Greiferbasis ist oder mit dieser fest verbunden ist. Die von der Kulissenführung definierte Kurve könnte auch von der Kreisform abweichen und jede beliebige seitlich nach aussen gewölbte Kurve darstellen, z.B. elliptische Kontur aufweisen.

Auch die zweite für den Greifarm vorgesehen Führung könnte anders ausgebildet sein, z.B. ebenfalls in Form einer Kulissenführung oder als weiterer Schwenkarm.

Die Abstützpunkte der Greifarme an der weiteren Führung könnten auch als Kugellager ausgebildet sein. Abwandlungen des Antriebsmechanismus sind keine Grenzen gesetzt. So können zur Betätigung des Hebelmechanismus anstelle einer Zahnstange auch umlaufende Zahnriemen, Zahnräder, Ketten, etc. verwendet werden. Ein drehbar gelagerter Druckzylinder könnte direkt auf Greifarm oder Schwenkarm wirken.

Die Erfindung ist ebenso auf Greifer anwendbar, die mehr als zwei Greifarme aufweisen, z.B. vier Greifarme, die sich von vier Seiten auf das zu greifende Gut zu bewegen. Ebenso ist es möglich, dass lediglich ein Greifarm mit einem erfindungsgemässen Führungselement zusammenwirkt und dass der andere Greifarm unbeweglich ist bzw. starr mit der der Greiferbasis verbunden ist. Auch bei letzterer Variante entfaltet der Erfindungsgedanke seine Vorteile, nämlich dass der Arbeitsbereich von zumindest einer Seite zugänglich wird, wenn der schwenkbare Greifarm in die offene Position gelangt und nach hinten bewegt wird.

Ein weiterer Aspekt der Erfindung bezieht sich auf eine Spannvorrichtung, mit der ring-, hülsen- bzw. schlauchförmige Gegenstände, wie z.B. aus Folienmaterial, Papier, Gummi, etc. gespannt werden können. In der Getränkeindustrie werden derartige Vorrichtungen dazu verwendet, um umlaufende Etiketten - also Etiketten in Art von Manschetten - auf Flaschen aufzubringen. Dabei werden die beschränkt elastischen Etiketten zu einem Folienschlauch aufgespannt, die Flasche wird durch den Folienschlauch gefördert und an jener Höhe, an der die Etikette angebracht werden soll, wird der Folienschlauch losgelassen und mit der Flasche - diese bereits umspannend - aus der Spannvorrichtung bewegt.

Das Spannen der Folienschläuche erfolgt über Spannelemente in Form von dünnen Stiften, oder auch Halbschalen, die in der Grundposition alle beieinanderstehen und so gleichsam einen einzelnen Stift oder Ring bilden. Auf diesen derart aus Einzelstiften oder Halbschalen zusammengesetzten Stift oder Rohr wird ein entsprechend abgelängtes Stück Folienschlauch mit einer Einschiessvorrichtung aufgeschossen, sodass er alle einzelnen Stifte umschliesst. Anschliessend werden die Stifte sternförmig auseinander bewegt und spannen dadurch den Folienschlauch auf. Über ein Loch in der Spannbasis gelangt dann eine Flasche in den Arbeitsbereich der Spannvorrichtung und nimmt den Folienschlauch mit sich.

Im Stand der Technik sind derartige Vorrichtungen bekannt, jedoch mit Nachteilen behaftet. Das Auseinanderbewegen der Stifte erfolgt durch Linearbewegungen, d.h. die einzelnen Spannstifte werden in radialer Richtung nach aussen bewegt. Einerseits stellt die Umwandlung einer Antriebsbewegung in eine Linearbewegung einen zusätzlichen Aufwand dar, andererseits erfordert es komplizierter Mittel, die einzelnen Linearbewegungen aufeinander zu synchronisieren, um ein gleichmässiges Auseinanderbewegen aller Stifte und damit ein gleichmässiges Aufspannen zu gewährleisten.

Die Erfindung löst dieses Problem mit einer Spannvorrichtung gemäss Anspruch 1, bei der das Auseinanderbewegen der Spannelemente eine Schwenkbewegung jedes einzelnen Spannelementes in Bezug zur Spannbasis beinhaltet. Die Spannbasis ist jener Teil der Spannvorrichtung, auf dem die Spannelemente bewegbar angeordnet sind. Der erfindungsgemässe Gedanke ist auf Spannvorrichtungen aller Art und für alle möglichen Zwecke anwendbar, somit auch auf solche, die mit nur zwei Spannelementen auskommen. In der Getränkeindustrie werden jedoch immer mehrere, entlang eines kreisförmigen Umfanges angeordnete bzw. gelagerte Spannelemente verwendet.

Die Massnahme, dass das Auseinanderbewegen der Spannelemente über eine Schwenkbewegung jedes einzelnen Spannelementes erfolgt, beseitigt die oben angesprochenen Nachteile einer Linearbewegung, insbesondere ermöglicht sie eine einfache und elegante Synchronisierung aller Einzelbewegungen.

Ausführungsformen der erfindungsgemässen Spannvorrichtung sind in den Unteransprüchen enthalten und werden nachfolgend anhand der Zeichnungen näher erläutert. Dabei zeigt

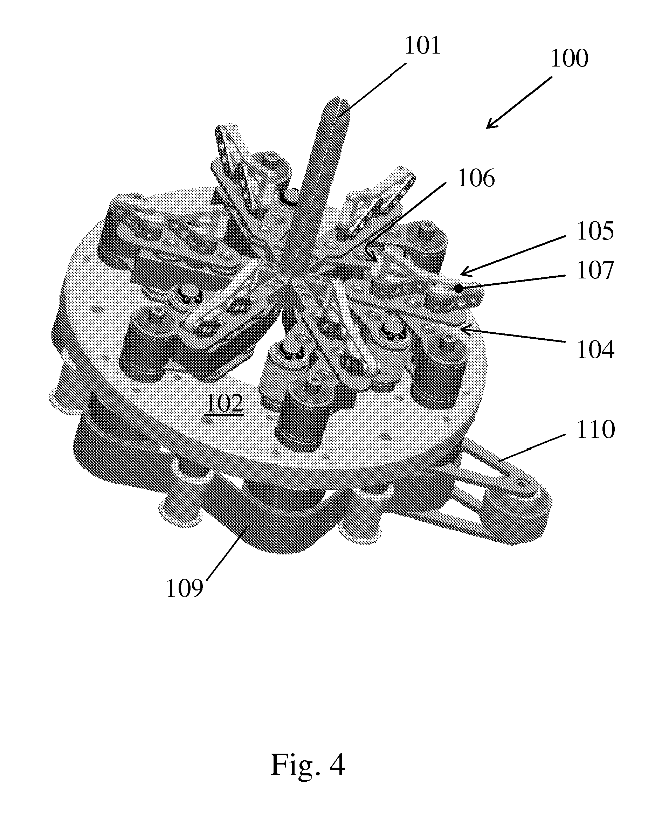

Fig. 4 eine erfindungsgemässe Spannvorrichtung in der Grundstellung,

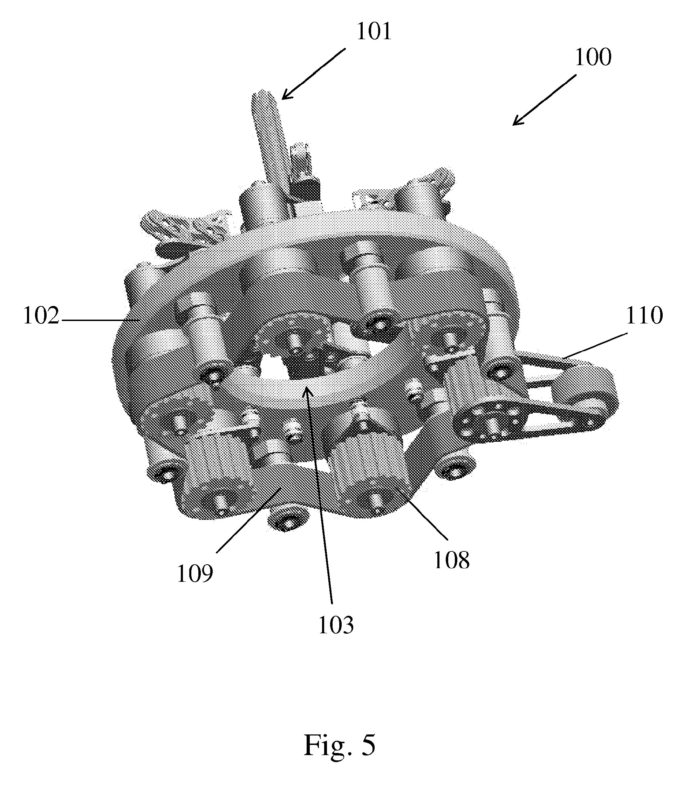

Fig. 5 die Spannvorrichtung von unten,

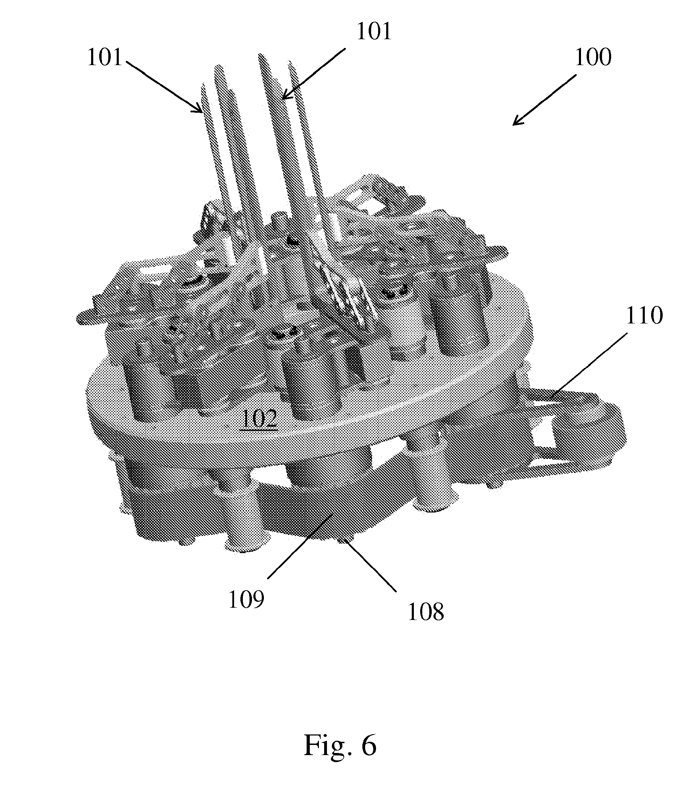

Fig. 6 die Spannvorrichtung in Spannstellung und mit den Klemmelementen in geschlossener Position, und

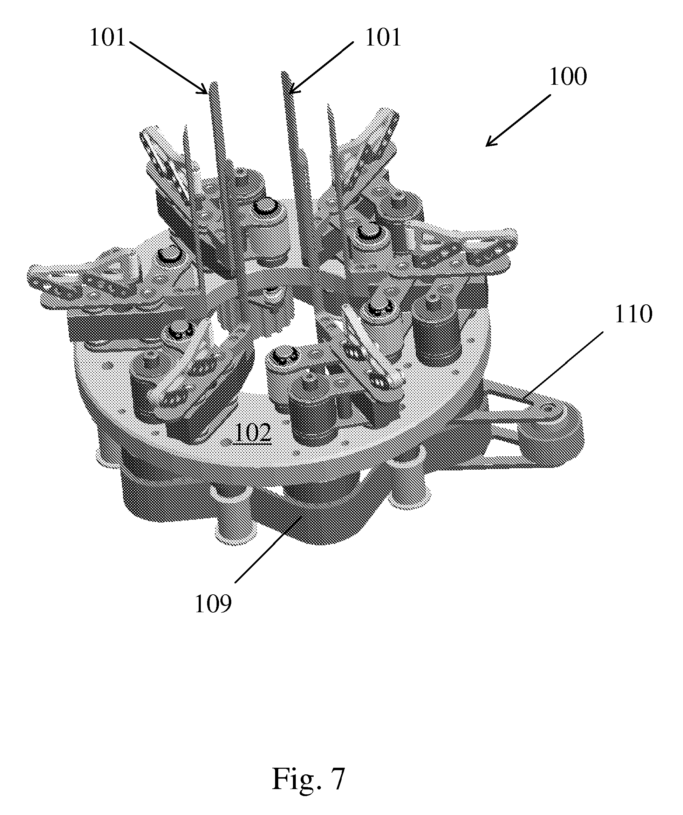

Fig. 7 die Spannvorrichtung in Spannstellung und mit den Klemmelementen in offener Position.

Fig. 4 zeigt eine Spannvorrichtung 100 bei der die einzelnen Spannelemente in Form von nach oben ragenden Stiften 101 ausgebildet sind. Die Stifte 101 sind jeweils auf einer Spannbasis 102, einer kreisförmigen Platte mit einer kreisförmigen Öffnung 103 in ihrem Zentrum, schwenkbar gelagert. Die Stifte 101 sind dabei über ein Gelenkparallelogramm 104 mit der Spannbasis 102 verbunden, wobei die Gelenkachsen des Gelenkparallelogramms im Wesentlichen parallel zu den Stiften 101 stehen. Die Gelenkparallelogramme 104 und die von ihnen getragenen Stifte 101 sind alle gleich ausgebildet und gleichmässig um die Öffnung 103 angeordnet. Bei einem synchronisierten Antrieb der Gelenkparallelogramme, der weiter unten näher beschrieben wird, bewegen sich die Stifte 101 aus der in Fig. 4 dargestellten Grundposition exakt sternförmig auseinander, obwohl jeder einzelne Stift in Bezug auf die Spannbasis 102 eine Schwenkbewegung vollführt. Fig. 6 zeigt die Spannvorrichtung in Spannstellung mit auseinander gefahrenen Stiften 101.

Auf einem beweglichen Arm eines jeden Gelenkparallelogramms 104 sitzt eine Klemmeinrichtung 105 mit einer Klemmbacke (Rolle) 106, die gegen die Aussenseite des jeweils zugeordneten Stiftes 101 mit einer Rolle, die beim Dehnen der Folie diese nicht beschädigt und mit der Dehnung mitgehen kann, ohne die Position der Folie zu verändern, drücken kann, um den (teilweise) auseinander gezogenen Folienschlauch in seiner Position zu fixieren. Beim Einbringen der Flasche in die Öffnung 103 der Spannbasis 102 verhindert diese Fixierung, dass die Flasche den Folienschlauch verfrüht mitreisst. Erst wenn die Flasche die richtige Position erreicht bzw. der Folienschlauch auf der richtigen Höhe der Flasche zu liegen kommt, werden die Klemmbacken 106 zurückgezogen und der Folienschlauch freigegeben, sodass dieser mit der Flasche aus der Spannvorrichtung 100 gelangt.

Die Klemmeinrichtung 105 besteht aus einem Gelenkparallelogramm 107, wobei die Klemmbacke 106 auf einem in Bezug auf den zugeordneten Stift 101 beweglichen Arm des Gelenkparallelogramms 107 sitzt. Die Gelenkachsen des Gelenkparallelogramms 107 stehen im dargestellten Ausführungsbeispiel jeweils senkrecht auf die Gelenkachsen jenes Gelenkparallelogramms 104, das einen Stift 101 mit der Gelenkbasis 102 verbindet.

Üblicherweise erfolgt das Spannen folgendermassen: Die Klemmbacken 106 befinden sich beim Einschiessen des Folienschlauches über die im Zentrum vereinigten Stifte 101 in geöffneter Position (Fig. 4). Anschliessend werden die Stifte 101 eine Teilstrecke weit auseinander gefahren, gefolgt vom Fixieren des Folienschlauchs durch die Klemmbacken 106 (Fig. 6). Nun erfolgt das vollständige Spannen des Folienschlauches, währenddessen bereits die zu etikettierende Flasche in die Öffnung 103 eingeführt wird. Befindet sich die Flasche in der richtigen Position, gehen die Klemmbacken 106 in die geöffnete Position und geben die Folie frei (Fig. 7)

Fig. 5 zeigt die Spannvorrichtung 100 von unten. Zu sehen ist der Antriebsmechanismus der Gelenkparallelogramme 104 für die Stifte 101. Ein Gelenk des Gelenkparallelogramms 104 setzt sich durch die Spannbasis 102 hindurch fort und endet in einem Zahnrad 108, das mit einem schwenkbaren Arm des Gelenkparallelogramms 104 drehfest verbunden ist. Ein umlaufender Zahnriemen 109 greift in alle Zahnräder 108 ein und synchronisiert die Schwenkbewegungen aller Gelenkparallelogramme 104. Diese Synchronisierungseinrichtung gewährleistet nicht nur ein Verschwenken aller Stifte 101 im selben Uhrzeigersinn, sondern sorgt auch für denselben Drehwinkel. Die Stifte 101 bewegen sich infolge dieser Massnahme exakt sternförmig auseinander und ermöglichen ein gleichmässiges Spannen des schlauchförmigen Gegenstandes.

Die Bewegung kann über einen nach aussen ragenden Hebel 110, der mit einem der Zahnräder 108 drehfest verbunden ist, auf die Spannvorrichtung 100 übertragen werden.

Die in den Fig. 4 bis 7 dargestellte Spannvorrichtung 100 stellt nur eine Möglichkeit dar, den erfinderischen Gedanken zu verwirklichen. Mehrere Abwandlungen und Varianten sind denkbar und werden im Folgenden kurz beschrieben.

Die Ausbildung eines Gelenkparallelogramms 104 ist nicht zwingend, so können ganz allgemein Gelenkvierecke in allen für den jeweiligen Zweck geeigneten Formen zum Einsatz kommen.

Anstelle eines Zahnriemens als Antrieb für die Stifte 101, könnte selbstverständlich auch ein Riemen, eine Kette oder jedes andere umlaufende

Mittel verwendet werden. Wenn dieses unter genügender Spannung steht, wie durch die in Fig. 4 dargestellten, jeweils zwischen den Gelenkparallelogrammen 104 angeordneten Umlenkrollen angedeutet wird, könnten anstelle von Zahnrädern auch einfache Übertragungsrollen verwendet werden. Der Antrieb der einzelnen Stifte 101 könnte auch gesondert erfolgen, z.B. über einzelne elektrisch synchronisierte Motoren.

Auch wenn die Erfindung anhand des Manschettierens von Flaschen beschrieben wurde, kann sie natürlich auch ausserhalb der Getränkeindustrie angewandt werden.

Ein weiterer Aspekt der Erfindung betrifft eine Einschiessvorrichtung , manchmal auch Beschickungsvorrichtung genannt, für das Ein- bzw. Aufschiessen eines schlauchförmigen Gegenstandes, wie einer Etikette, Folie, etc. auf eine Vorrichtung zu weiteren Verarbeitung bzw. Konfektion, z.B. auf die Stifte einer Spannvorrichtung der oben beschriebenen Art.

Üblicherweise wird in der Getränkeindustrie ein zu einem Endlosband zusammengedrückter bzw. -gefalteter Folienschlauch über mehrere Rollen in Richtung Abtrennstelle gefördert, an der ein Teilstück des Folienschlauches vom Endlosband abgetrennt und in Richtung weiterer Verarbeitung weggeschossen wird.

Dazu wird der Folienschlauch mit einem bleistiftförmigen Werkzeug, im Weiteren mit Öffnungswerkzeug bezeichnet und in der Fachsprache auch Mandrell oder Dorn genannt, geöffnet, d.h. der Folienschlauch wird endlos über dieses Werkzeug gestülpt.

Das Abtrennen erfolgt über zwei Paare seitlich des Öffnungswerkzeuges laufender Rollen, deren Drehachsen parallel zueinander stehen und die jeweils das sich bewegende Endlosband zwischen sich und zwischen am Öffnungswerkzeug gelagerten kleineren Rollen (die im Inneren des geförderten Schlauches verschwinden) einklemmt und befördert.

Die beiden Rollenpaare sind in Förderrichtung voneinander beabstandet. Durch entsprechende Steuerung der diese Rollenpaare antreibenden Motoren kann ein kurzfristig erhöhter Zug auf das Endlosband im Bereich zwischen den Rollenpaaren ausgeübt werden, sodass ein Teilstück eines Folienschlauches mit gewünschter Länge abgerissen und in eine vorgegebene Richtung weggeschleudert wird. Dazu wird das in Förderrichtung weiter vorne angeordnete Rollenpaar kurzzeitig schneller bewegt, als das weiter hinten angeordnete Rollenpaar. In regelmässigen Abständen vorgesehene Vorperforierungen im Endlosband an den geplanten Abrissstellen erleichtert die Trennung vom Endlosband.

Den Einschiessvorrichtungen aus dem Stand der Technik wohnen Nachteile inne, die die Verfahrenseffizienz beschränken und damit die Fertigung verlangsamen. Insbesondere tritt das Problem auf, dass bei einer Beschickung der Einschiessvorrichtung mit einem Schlauch anderer Dimension, z.B. eines breiteren Folienschlauchs für grössere Flaschen, zunächst das Paar nebeneinander liegender Rollen, die das Abreissen eines Teilstückes bewirken, auseinander bewegt werden müssen, um die nun dickere Mandrell, Folie zwischen sich aufnehmen zu können. Dabei muss auch das Öffnungswerkzeug, das den Schlauch leicht öffnet, ausgetauscht werden. Die Drehachsen der beiden Abrissrollen liegen im Stand der Technik parallel zur Ebene, in der das Endlosband in seinem letzten Abschnitt vor den Abrissrollen verläuft. Das bedeutet, dass eine der beiden, oder beide Abrissrollen weiter nach aussen bewegt werden muss, also über die Kontur der Einschiessvorrichtung hinaus. Hier besteht aber die Gefahr, dass diese Rollen mit einer benachbarten bzw. nachfolgenden Fertigungsvorrichtung, im vorliegenden Fall mit einer Spannvorrichtung, kollidieren.

Die vorliegende Erfindung löst dieses Problem mit einer Einschiessvorrichtung gemäss Anspruch 10 zum Abtrennen und Einschiessen von abgelängten schlauchförmigen Folien in eine nachfolgende Verarbeitungseinheit, z.B. in eine Spannvorrichtung, umfassend eine Fördereinrichtung für ein Endlosband und zwei Paare nebeneinander liegender Abrissrollen, deren Drehachsen zueinander im wesentlichen parallel stehen, wobei die beiden Abrissrollenpaare in Förderrichtung voneinander beabstandet sind und mit einem bleistiftförmigen Öffnungswerkzeug zusammenwirken, über das die schlauchförmige Folie endlos übergestülpt wird, wobei die Drehachsen der Abrissrollen im wesentlichen senkrecht zur Ebene stehen, in der das Endlosband in seinem letzten Abschnitt vor den Abrissrollen verläuft.

Durch diese Anordnung der Rollen, können die diesen zugeordneten Motoren in einer Weise montiert werden, die beim Austausch des Schlauches und des Öffnungswerkzeuges jede Kollision mit einer benachbarten Spannvorrichtung ausschliessen.

Bevorzugte Varianten der erfindungsgemässen Einschiessvorrichtung sind den Unteransprüchen zu entnehmen und werden nachfolgend anhand der Zeichnungen näher erläutert. Dabei zeigt

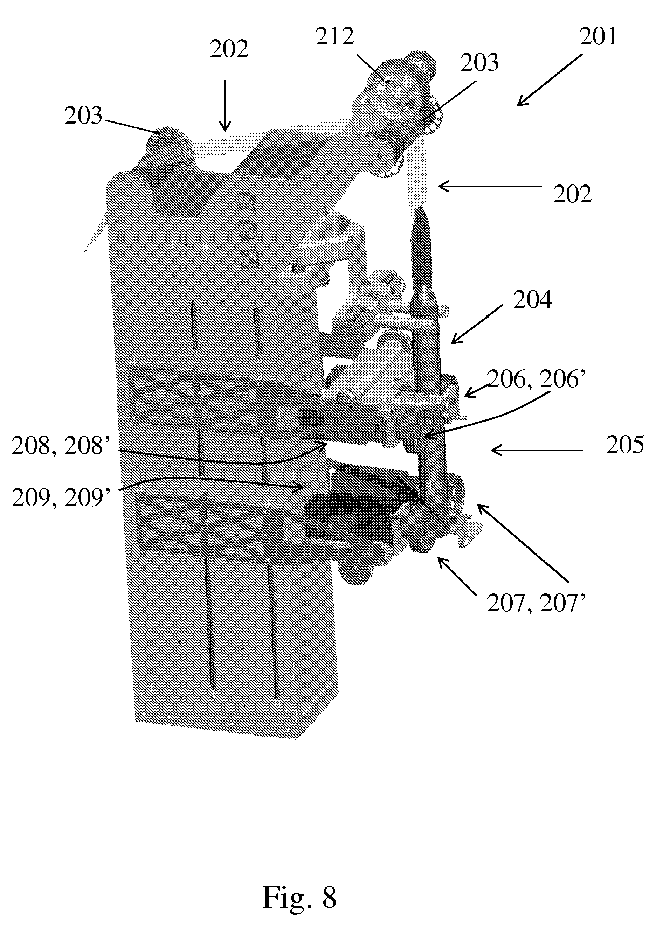

Fig. 8 eine erfindungsgemässe Einschiessvorrichtung, und

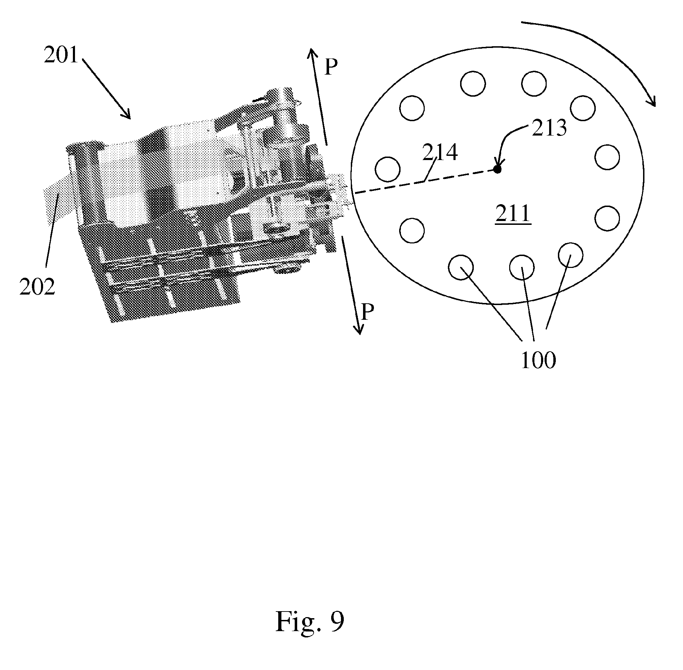

Fig. 9 eine erfindungsgemässe Einschiessvorrichtung von oben mit einer benachbarten (schematisch dargestellten) Vorrichtung, in der die Teilstücke aufgenommen und weiter behandelt werden.

Fig. 8 zeigt eine Einschiessvorrichtung 201 mit einem Endlosband 202, das über Förderrollen 203 geführt und nach unten umgelenkt wird. In weiterer Folge wird das schlauchförmige Endlosband durch ein bleistiftförmiges Öffnungswerkzeug 204 geöffnet und gelangt zur Abrissstelle 205. Das Abtrennen einer Etikette vom Endlosband 202 erfolgt im Bereich zwischen zwei Paaren von sich drehenden Abrissrollen 206, 206' und 207, 207', die jeweils seitlich des über das Öffnungswerkzeug 204 gezogenen Folienschlauches 202 anliegen. Sie wirken dort mit (nicht dargestellten) kleineren Rollen bzw. einem Rollenmagazin zusammen, die am Öffnungswerkzeug 204 gelagert sind und die zu den Drehachsen der Abrissrollen parallele Drehachsen haben. Diese kleineren Rollen sind ebenfalls vom Schlauch 202 umhüllt. Die Motoren 208, 208' bzw. 209, 209' für den Antrieb der Rollen 206, 206' und 207, 207' befinden sich jeweils hinter den Rollen.

Gehalten wird das längliche Öffnungswerkzeug 204 durch zwei benachbarte drehbare Stifte, die jeweils in eine Einkerbung im Öffnungswerkzeug 204 eingreifen, wobei hier eine fliegende Verbindung - die Stifte berühren das Öffnungswerkzeug 204 nicht - gewährleistet ist, sodass die Folie zwischen Stiften und Öffnungswerkzeug 204 gleiten kann.

Fig. 9 zeigt eine erfindungsgemässe Einschiessvorrichtung 201 von oben und ihr benachbart eine drehbare Scheibe 211, die eine im Arbeitsablauf nachfolgende Vorrichtung darstellt. In der Praxis handelt es sich um eine Vielfach-Spannvorrichtung. Dies ist so zu verstehen, dass entlang des Umfanges der Scheibe 211 in gleichmässigen Abständen Spannvorrichtungen 100 der oben beschriebenen Art angeordnet sind. Im Arbeitsablauf gelangen schrittweise die einzelnen Spannvorrichtungen 100 unter die Einschiessvorrichtung 201 und nehmen die abgetrennten Etiketten auf.

Der Vorteil der erfindungsgemässen Einschiessvorrichtung 201 lässt sich anhand der Pfeile P veranschaulichen, die die Ausfahrrichtung der Abrissrollen 206, 206' und 207, 207' und der dazugehörigen Motoren (Rolle und dazugehöriger Motor bilden üblicherweise eine Einheit, die als Ganzes verschiebbar ist) darstellen, wenn der Schlauch und/oder das Öffnungswerkzeug gewechselt werden müssen. Es zeigt sich, dass die Kontur der Vielfach-Spannvorrichtung nicht überschritten wird, da die Rollen bzw. Motoren seitlich wegbewegt werden. Das Wechseln wird dadurch besonders einfach gestaltet. Erfindungsgemäss stehen die Drehachsen der Abrissrollen 206, 206' und 207, 207' bzw. der diesen zugeordneten Antriebsmotoren senkrecht auf die Ebene, in der die Folienbahn verläuft, bevor sie die Abrissstelle erreicht.

Alternativ lässt sich die erfindungsgemässe Einschiessvorrichtung 201 so kennzeichnen, dass die Drehachsen der Abrissrollen 206, 206' und 207, 207' bzw. der diesen zugeordneten Antriebsmotoren in Richtung der Vielfach-Spannvorrichtung weisen; oder, dass die Drehachsen der Abrissrollen 206, 206' und 207, 207' bzw. der diesen zugeordneten Antriebsmotoren im wesentlichen parallel sind zur horizontalen Verbindungslinie 214 zwischen der Folienbahn 201 in der Abrissstelle und der Drehachse 213 des Rundtisches 211.

In einer bevorzugten Variante ist ein Sensor, z.B. ein Inkrementalgeber, vorgesehen, der unmittelbar am laufenden Folienband abgreift und ein unmittelbares Signal für die Steuerung liefert. In einer bevorzugten Ausgestaltung handelt es sich dabei um eine Rolle 212, die am Folienband 202 anliegt und durch dieses angetrieben wird. So können Parameter wie Geschwindigkeit, Geschwindigkeitsänderungen, Spannung, u.dgl. des Folienbandes ermittelt werden. Die Steuerung kann anhand der Messdaten, z.B. bei Überschreiten von Schwellwerten, die Regelung der Förderrollen/-motoren und/oder Abrissrollen/- motoren übernehmen.

## Patentansprüche

1. Spannvorrichtung (100) zum Spannen ringförmiger oder schlauchförmiger Gegenstände insbesondere von Etiketten für Flaschen, mit mindestens zwei Spannelementen (101) für den Eingriff mit den zu spannenden Gegenständen, wobei die Spannelemente (101) auf einer Spannbasis (102) angeordnet und auseinander bewegbar sind, **dadurch gekennzeichnet, dass** das Auseinanderbewegen der Spannelemente (101) eine Schwenkbewegung jedes einzelnen Spannelementes (101) in Bezug zur Spannbasis (102) beinhaltet.

2. Spannvorrichtung nach Anspruch 1, **dadurch gekennzeichnet, dass** die Spannelemente (101) jeweils auf einem beweglichen Arm eines Gelenkvierecks (104), vorzugsweise eines Gelenkparallelogramms, sitzen, das auf der Spannbasis (102) gelagert ist.

3. Spannvorrichtung nach einem der Ansprüche 1 oder 2, **dadurch gekennzeichnet, dass** ein Antriebsmechanismus für die Spannelemente (101) derart ausgelegt ist, dass die Schwenkbewegung der Spannelemente (101) im selben Uhrzeigersinn erfolgt.

4. Spannvorrichtung nach einem der Ansprüche 1 bis 3, **dadurch gekennzeichnet, dass** eine Synchronisiereinrichtung für die Bewegung der Spannelemente (101) vorgesehen ist, die bei allen Spannelementen (101) in Bezug auf ihre Schwenkbewegung denselben Drehwinkel bewirkt, wobei vorzugsweise sich die Synchronisiervorrichtung aus Zahnrädern (108), die jeweils einem Gelenkviereck (104) zugeordnet sind und mit diesem antriebsmässig zusammenwirken, und einem umlaufenden Zahnriemen (109), der in alle Zahnräder (108) gleichzeitig eingreift, zusammensetzt.

5. Spannvorrichtung nach einem der Ansprüche 1 bis 4, **dadurch gekennzeichnet, dass** mehr als zwei Spannelemente (101) im Wesentlichen gleichmässig entlang eines Umfanges angeordnet sind.

6. Spannvorrichtung nach einem der Ansprüche 1 bis 5, **dadurch gekennzeichnet, dass** die Spannelemente (101) in Form von Stiften ausgebildet sind, die mit ihren freien Enden im wesentlichen in dieselbe Richtung weisen, wobei die durch die Schwenkbewegung der Spannelemente (101) definierten Schwenkachsen im wesentlichen parallel zu dieser Richtung orientiert sind.

7. Spannvorrichtung nach einem der Ansprüche 1 bis 6, **dadurch gekennzeichnet, dass** die Spannbasis (102) eine vorzugsweise kreisförmige Öffnung (103), insbesondere zum Beschicken mit Flaschen aufweist, in Verlängerung derer sich die Spannelemente (101) von der nicht gespannten in die gespannte Stellung bewegen.

8. Spannvorrichtung nach einem der Ansprüche 1 bis 7, **dadurch gekennzeichnet, dass** jedem Spannelement (101) ein Klemmelement (105) zugeordnet ist zum Einklemmen des zu spannenden Gutes zwischen Spannelement (101) und Klemmelement (105), wobei das Klemmelement (105) relativ zum Spannelement (101) bewegbar ist, und dass diese Bewegung eine Schwenkbewegung jedes einzelnen Klemmelementes (105) in Bezug zum zugeordneten Spannelement (101) beinhaltet.

9. Spannvorrichtung nach Anspruch 8, **dadurch gekennzeichnet, dass** die Klemmelemente (105) jeweils auf einem beweglichen Arm eines Gelenkvierecks (107), vorzugsweise eines Gelenkparallelogramms, sitzen, wobei vorzugsweise die Drehachsen des Gelenkvierecks (107), auf dem die Klemmelemente (105) sitzen, senkrecht auf die Achsen des Gelenkvierecks (107) stehen, auf dem die Spannelemente (101) in Bezug zur Spannbasis (102) sitzen.

10. Einschiessvorrichtung (201) zum Abtrennen und Einschiessen von abgelängten schlauchförmigen Folien in eine nachfolgende Verarbeitungseinheit, z.B. in eine Spannvorrichtung (100) insbesondere nach einem der Ansprüche 1 bis 9, umfassend eine Fördereinrichtung für ein Endlosband (202) und zwei Paare nebeneinander liegender Abrissrollen (206, 206'; 207, 207'), deren Drehachsen zueinander im wesentlichen parallel stehen, wobei die beiden Abrissrollenpaare in Förderrichtung voneinander beabstandet sind und mit einem Öffnungswerkzeug (204) zusammenwirken, über das die schlauchförmige Folie endlos übergestülpt wird, wobei die Drehachsen der Abrissrollen (206, 206'; 207, 207') im wesentlichen senkrecht zur Ebene stehen, in der das Endlosband in seinem letzten Abschnitt vor den Abrissrollen (206, 206'; 207, 207') verläuft.

11. Einschiessvorrichtung nach Anspruch 10, **dadurch gekennzeichnet, dass** ein Sensor vorzugsweise ein Inkrementalgeber vorgesehen ist, der Messsignale unmittelbar von dem Endlosband abnimmt, wobei vorzugsweise der Sensor eine Rolle umfasst, die einer Förderrolle der Fördereinrichtung gegenüberliegt und sich mit dem vorbeiziehenden Endlosband mitdreht.

12. Greifer, insbesondere zum Greifen von Flaschen, mit mindestens zwei, relativ zueinander bewegbaren Greifarmen (1, 1'), die mit einer Greiferbasis verbunden sind, **dadurch gekennzeichnet, dass** zumindest ein Greifarm (1, 1') über ein Führungselement mit der Greiferbasis verbunden ist, das einen Punkt des Greifarms während der Greifbewegung auf einer seitlich nach aussen gewölbten Kurve hält, und dass der Greifarm (1, 1') an einem anderen Punkt mit einer weiteren Führung zusammenwirkt, wobei vorzugsweise die nach aussen gewölbte Kurve eine kreisförmige Kontur aufweist.

13. Fertigungsstrasse für das Stretch-Sleeve-Etikettieren von Behältnissen umfassend eine Spannvorrichtung nach einem der Ansprüche 1 bis 9.

14. Fertigungsstrasse nach Anspruch 13, **dadurch gekennzeichnet, dass** der Spannvorrichtung eine Einschiessvorrichtung nach einem der Ansprüche 10 oder 11 vorgeschaltet ist, die die Stretch-Sleeve-Etiketten auf die Spannelemente (101) der Spannvorrichtung (100) schiesst.

15. Fertigungsstrasse nach Anspruch 13 oder 14, **dadurch gekennzeichnet, dass** ein Greifer nach Anspruch 12 vorgesehen ist, der die zu etikettierenden Behältnisse greift und bewegt.
